# EUROPEAN PATENT SPECIFICATION

(11) **EP 1 596 081 B1**
(45) Date of publication and mention of the grant of the patent: **14.04.2010**
(21) Application number: 04708453.8
(22) Date of filing: 05.02.2004
(51) Int. Cl.: F16C 43/06, F16C 19/38

(54) **METHOD FOR ASSEMBLING ROLLING BEARING DEVICE**
VERFAHREN ZUR MONTAGE EINER WÄLZLAGERVORRICHTUNG
PROCEDE D'ASSEMBLAGE D'UN DISPOSITIF A PALLIER DE ROULEMENT

(30) Priority: 07.02.2003 JP 2003031472
(43) Date of publication of application: 16.11.2005
(73) Proprietor: JTEKT Corporation, Osaka-shi Osaka 542-8502 (JP)
(72) Inventor: SEO, Nobuyuki, Kitakatsuragi-gun, Nara 636-0021 (JP)
(74) Representative: Sajda, Wolf E.
(86) International application number: PCT/JP2004/001185
(87) International publication number: WO 2004/070222

(56) References cited:
- EP-A- 0 980 985
- JP-A- 2002 283 805
- JP-A- 2003 056 570
- JP-U- 63 004 233
- US-A- 6 135 643
- US-B1- 6 397 471
- PATENT ABSTRACTS OF JAPAN vol. 2003, no. 02, 5 February 2003 (2003-02-05) -& JP 2002 283805 A (NSK LTD), 3 October 2002 (2002-10-03)

## Description

### Technical Field

The present invention relates to an assembling method for double-row tapered-roller bearing assembly.

### Background Art

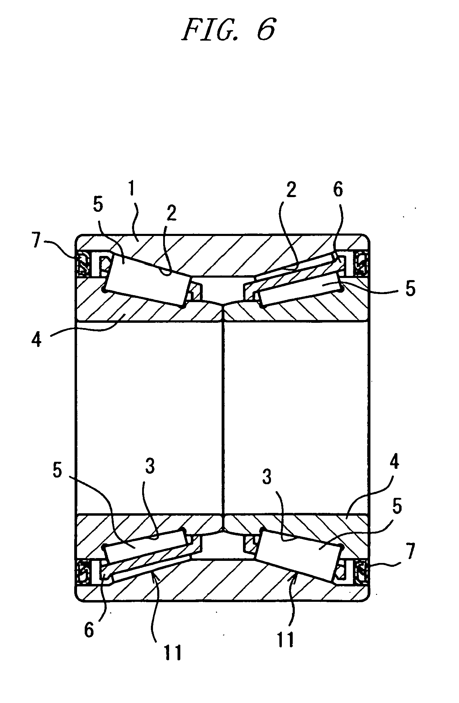

A double-row tapered-roller bearing assembly has been used as a bearing for use with an automotive wheel or the like. FIG.6 is a sectional view of the double-row tapered-roller bearing assembly conventionally used widely in the art (Conventional Example 1). The Conventional Example 1 includes: a single outer ring 1 having two outer raceways 2, 2; a pair of inner rings 4, 4 having inner raceways 3, 3; and plural tapered rollers 5, 5 rollably interposed between the outer raceways and the inner raceways. The conically recessed outer raceways 2, 2 are formed on an inner peripheral surface of the outer ring 1. These outer raceways 2, 2 are disposed in opposed relation so that an inside diameter of the outer ring 1 is progressively decreased from either end thereof toward the center thereof. The inner rings 4, 4 are individually formed with the conically protruded inner raceways 3, 3 in correspondence to the respective outer raceways 2, 2. The tapered rollers 5, 5 are clamped between the inner rings 4, 4 and the outer ring 1 as interposed between the inner raceways 3, 3 and the outer raceways 2, 2 and are arranged as regularly spaced by means of a cage 6. Seal rings 7, 7 are disposed between the opposite ends of the inner peripheral surface of the outer ring 1 and a respective end of outer peripheral surfaces of the inner rings 4, 4. The seal rings 7, 7 are disposed for the purposes of hermetically sealing space between the outer ring 1 and the inner rings 4, 4 thereby preventing the invasion of external foreign substances (dusts, water, metal powder and the like) and the leakage of lubricant.

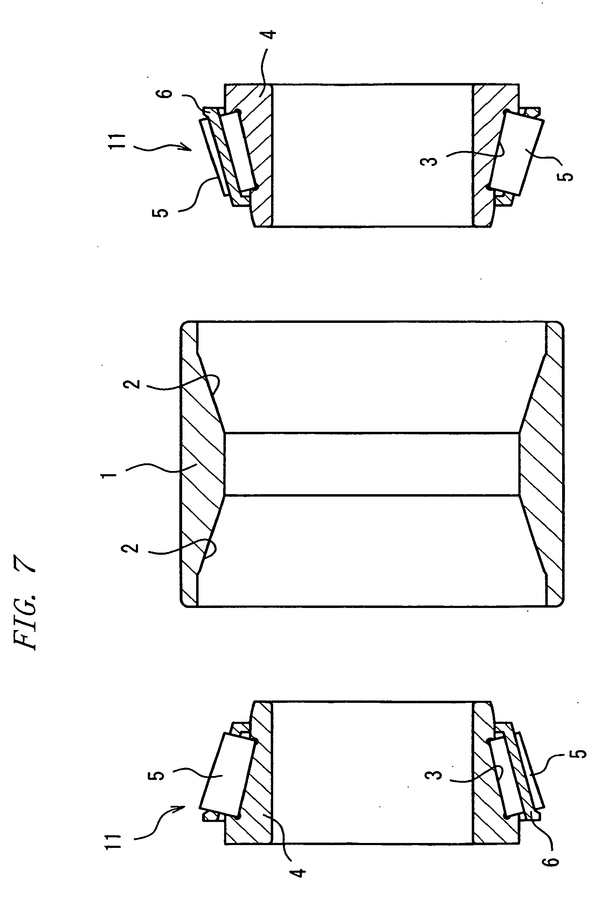

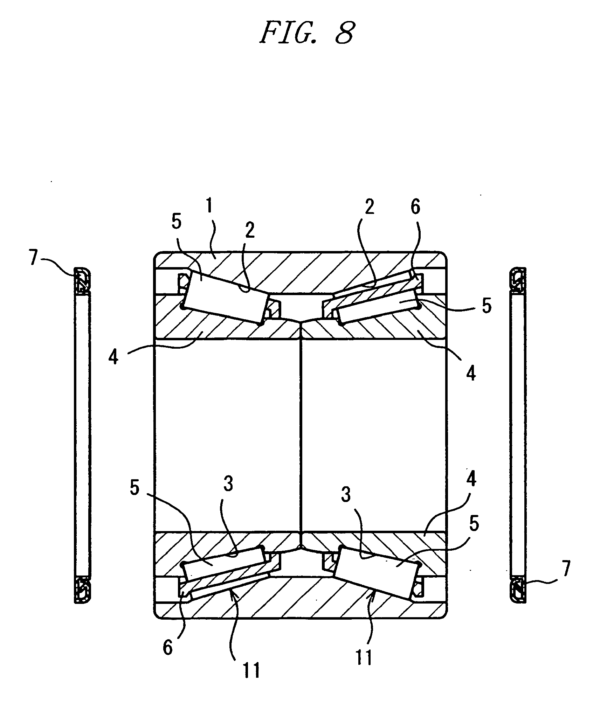

The aforementioned double-row tapered-roller bearing assembly of the Conventional Example 1 is assembled as follows. First, as shown in FIG.7, sub-assemble members 11 each combining the cage 6 with the tapered rollers 5 are assembled to the inner ring 4. The resultant inner rings are inserted into the inner periphery of the outer ring 1 so as to mate the tapered rollers 5 with the outer raceways 2, 2 and the inner raceways 3.3, as shown in FIG.8. Finally, the seal rings 7, 7 are fitted in the respective spaces between the opposite ends of the inner peripheral surface of the outer ring 1 and the respective ends of the outer peripheral surfaces of the inner rings 4, 4.

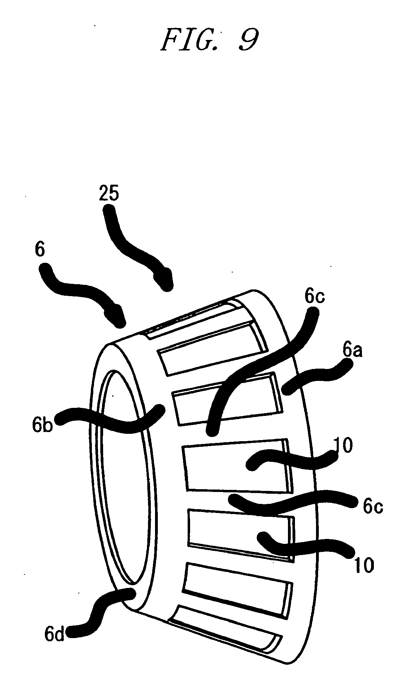

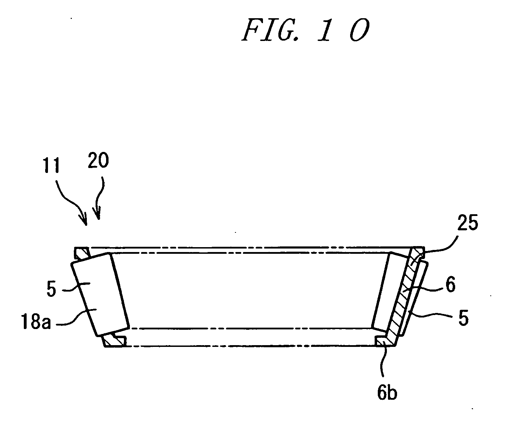

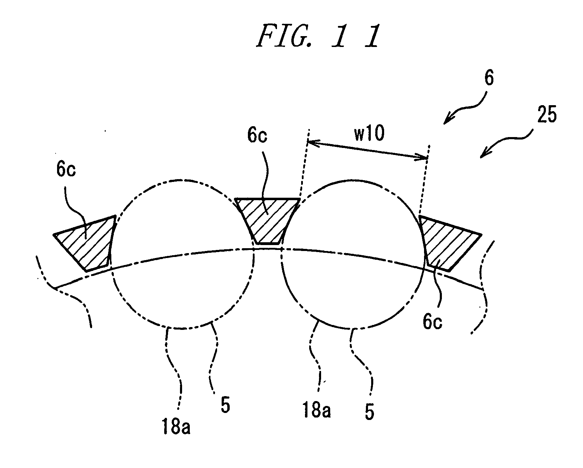

As shown in FIG.9, the cage 6 substantially defines a truncated conical surface including: a greater ring 6a and a smaller ring 6b as a pair of ring members in spaced relation; a plurality of ridges 6c bridged between these ring members; and an annular rib 6d extended radially inwardly from a radial inside end of the smaller ring 6b. In such a construction, a trapezoidal window pocket 10 for accommodating the tapered roller 5 is defined between a respective pair of adjoining ridges 6c such that the plural trapezoidal pockets are arranged with equal spacing. FIG.10 is a sectional view showing the sub-assemble member 11 with the tapered rollers 5 accommodated in the pockets 10. The tapered rollers 5 are disposed in a manner to sink into the respective pockets 10 from a diametrical inner side of the cage 6. FIG.11 is a sectional view of the ridges 6c of the cage 6 taken on the plane perpendicular to a longitudinal direction of the ridges. The tapered rollers 5, disposed as described above, are depicted with the phantom lines. A circumferential width W10 of the pocket or the space between each pair of adjoining ridges 6c is smaller than a diameter of the tapered roller 5 as determined at each place on a generatrix of the tapered rollers 5. Hence, the tapered rollers 5 are held in posture as sunk into the respective pockets of the cage 6. In the sub-assemble member 11, the cage 6 merely supports the tapered rollers 5 on diametrical outer sides thereof. Hence, the tapered rollers 5 never drop from the sub-assemble member 11 diametrically outwardly thereof. Depending upon some posture of the sub-assemble member 11, however, the tapered roller 5 may incline diametrically inwardly to drop off from the sub-assemble member 11. A cage having the structure detrimentally allowing the disposed tapered rollers to drop diametrically inwardly, as exemplified by this cage 6, has high general-purpose versatility but also has a drawback that the tapered rollers are apt to drop off.

Since the Conventional Example 1 adopts the aforementioned assembling method as shown in FIG.7 and FIG.8, the drop-off of the tapered rollers 5 is not encountered during the assembling steps. This is because the sub-assemble member 11 can be handled in a state where the sub-assemble member 11 is assembled with the inner rings 4, as shown in FIG.7. That is, the tapered rollers 5 in the state of FIG.7 are clamped between the inner rings 4 and the cage 6 so that the tapered rollers are retained as prevented from dropping off. .

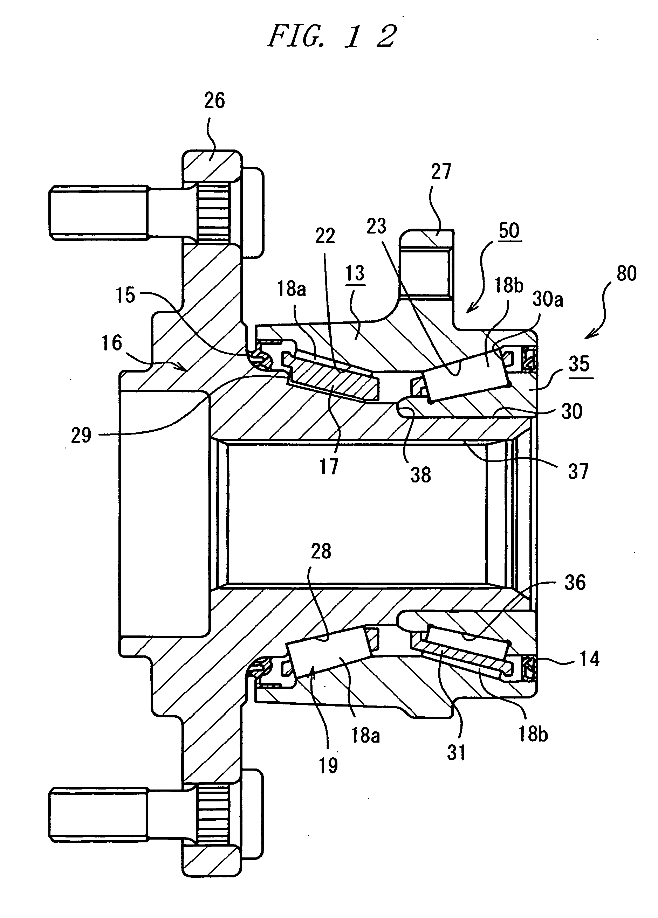

More recently, a hub unit having a so-called third generation structure has been proposed aiming at reducing costs by reducing the number of components. FIG.12 illustrates an example of a conventionally known structure of the hub unit (Conventional Example 2). Unlike the Conventional Example 1, this hub unit is constructed such that one end of a hub body 16 is formed with a flange 26 for supporting a road wheel, that an outer peripheral surface of an intermediate portion of the hub body 16 is formed with a first inner raceway 28 constituting a first-row tapered-roller bearing, and that the other end of the hub body 16 is adapted to allow an inner ring 35 having a second inner raceway 36 to be fitted on an outer periphery thereof. Such a structure cannot adopt the assembling step, as suggested by the conventional example 1, wherein a sub-assemble member 19, combined with the hub body 16 defining the inner ring, is inserted into an outer ring 13. In the case of the conventional example 2 shown in FIG.12, the flange 26 formed at the one end of the hub body 16 interferes, thus disabling the mounting of a first seal ring 15 to place near the flange after insertion of the hub body 16 into the outer ring 13. Hence, the following steps are taken in this case. First, the sub-assemble member 19 having first-row tapered rollers 18a disposed in a first cage 17 is placed on a first outer raceway 22 of the outer ring 13. Next, the first seal ring 15 is mounted to place. Subsequently, the hub body 16 is inserted into the outer ring 13. In the case of the structure of the Conventional Example 2, it is impossible to handle the sub-assemble member 19 in a state where the sub-assemble member is assembled with the hub body 16 defining the inner ring.

When the hub body 16 is inserted into the outer ring 13 according to the conventional example 2, either one of the following methods is taken. (1) The outer ring 13 with the sub-assemble member 19 and the first seal ring 15 mounted thereto is positioned to direct a rotary axis of the bearing horizontally and then, the outer ring 13 is combined with the hub body. (2) The outer ring 13 with the sub-assemble member 19 and the first seal ring 15 mounted thereto is positioned such that the rotary axis of the bearing is directed vertically while a second outer raceway 23 is positioned upwardly relative to the first outer raceway 22 and then, the outer ring 13 is combined with the hub body 16. The reason for taking the method (1) or (2) is because it is more efficient to move the lighter component when combining these components. Another reason for taking the method (2) is as follows. In the subsequent step, the inner ring 35 is press-fitted on the hub body 16. In order to receive an axial force associated with the press-fit, the hub body 16 is placed on a jig as upstanding on its side formed with the flange 26. According to the method (2), the hub body may be subjected to this step in an as-is state, so that the operation efficiency is increased. Unfortunately, the methods (1) and (2) cannot obviate the drop-off of the first-row tapered rollers 18a.

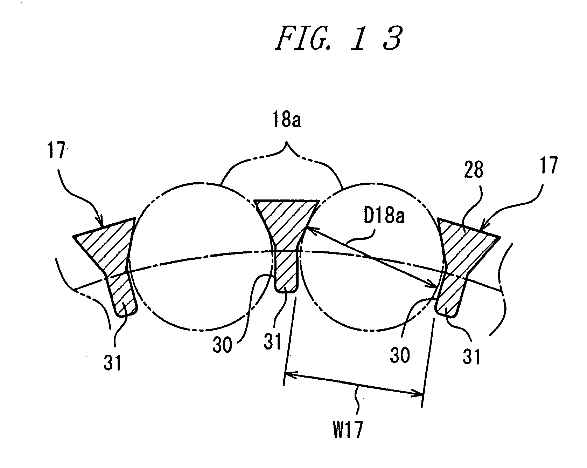

In order to overcome this problem, the Conventional Example 2 devises the structure of the first cage 17 which is designed as an anti-drop cage. In a state where the first-row tapered rollers 18a and the first cage 17 are combined into the sub-assemble member 19, the tapered rollers 18a are retained by the first cage 17 so as to be prevented from dropping diametrically inwardly. FIG.13 is a sectional view showing ridges 17c of the first cage 17 of the conventional example 2. In the figure, the tapered rollers 18a so retained are depicted with the phantom lines. Referring to FIG.13, a width W17 of a pocket in section, as viewed from the diametrical inner side of the first cage 17, is smaller than a diameter D 18a of the tapered roller 18a in section. Thus, the tapered roller 18a is so retained as not to drop diametrically inwardly (see, for example, JP-A-2000-65049).

### Disclosure of the Invention

Unfortunately, the anti-drop cage as illustrated by the first cage 17 of the aforementioned Conventional Example 2 does not have the general-purpose versatility and hence, an enormous cost is required for fabricating the cage. On the other hand, the cage of the structure allowing the rollers to drop diametrically inwardly, as exemplified by the cage 6 of the Conventional Example 1, has the general-purpose versatility so as to be fabricated on a mass-production basis. Hence, the cage has an advantage of low fabrication cost. However, the cage cannot obviate the aforementioned problem associated with the drop-off of the tapered rollers. The problem may be encountered during the steps prior to the insertion of the hub body into the outer ring.

The document JP-A-2002-283 805 discloses a method of assembling a hub unit for an automobile. In the conventional device, tapered rollers positioned radially outside are assembled on a circumference of a first inner bearing ring such that the tapered rollers are spaced away from a first outer bearing ring, but the heads of the rollers contact a side face of a first extended diameter side collar. A narrowed step member formed on an axially inner end portion of a hub is depressed into a bore of an inner wheel with the heads of tapered rollers positioned axially inside being contacted to a side face of a second extended diameter side collar by the influence of gravity. In the conventional device it is necessary, however, to use a cage of a specific configuration having a lower general versatility to accommodate the rollers. Therefore, the thickness of the bottom face of pockets in the respective cages is clearly larger than the radius of a smaller bottom of the tapered rollers.

It is therefore an object of the invention to provide an assembling method wherein the double-row tapered-roller bearing assembly comprising the hub body formed with the flange may be assembled without using a costly cage having a poor general-purpose versatility, but by exclusively using a cage featuring the high general-purpose versatility to increase the degree of freedom of posturing the members during the assembly work.

According to the invention, the problem is solved by a method as defined in the patent claim.

Hence, according to the invention an assembling method for a double-row tapered-roller bearing assembly is disclosed, which comprises:
an outer ring including a first outer raceway and a second outer raceway formed on an inner peripheral surface thereof;
a hub body including a first inner raceway in opposing relation with the first outer raceway, and formed with a flange projecting diametrically outwardly from one end thereof;
an inner ring including a second inner raceway in opposing relation with the second outer raceway, and fixedly fitted on an outer peripheral surface of the other end of the hub body;
a plurality of first-row tapered rollers interposed between the first inner raceway and the first outer raceway;
a first cage allowing the first-row tapered rollers to be arranged thereon at regular space intervals and to be inclined radially inwardly not being constructed to restrain the first-row tapered rollers from dropping off, wherein the ratio formed by the thickness of a bottom face of a pocket of the first cage divided by the radius of a smaller bottom of the first-row tapered rollers is in the range of 0.4 to 0.7; and
a first seal ring disposed on the inner peripheral surface of the outer ring at its end close to the first outer raceway;
wherein the method comprises the following steps:
   a first step of forming a first step member by combining a sub-assemble member with the first outer raceway of the outer ring, the sub-assemble member combining the first cage with the first-row tapered rollers;
   a second step of forming a second step member by mounting the first seal ring to the first step member; and
   a third step of combining the second step member with the hub body,
wherein during the first to third steps, the individual first-row tapered rollers are supported by the first cage in a manner that in a state, where the first cage is horizontally supported and has its greater diameter side positioned upwardly, all the first-row tapered rollers of the sub-assemble member have their centroids located radially outwardly with respect to the radially innermost support points on which the first-row tapered rollers are supported by the first cage.

According to such an assembling method, the double-row tapered-roller bearing assembly including the flange at the hub body may be fabricated without using a costly cage having no general-purpose versatility. Although a cage having the general-purpose versatility is constructed to allow the tapered rollers to drop radially inwardly, the tapered rollers are prevented from inclining radially inwardly by supporting the tapered rollers on the cage horizontally positioned, as described above. Thus, the drop-off of the tapered rollers is obviated so that the bearing assembly may be fabricated using a cage having the general-purpose versatility.

According to the invention as described above, the double-row tapered-roller bearing assembly including the hub body formed with the flange can be fabricated without using a costly cage having poor general-purpose versatility but by exclusively using a cage featuring the high general-purpose versatility.

### Brief Description of the Drawings

FIG.1 is a sectional view showing an example of a roller bearing assembly fabricated according to the invention;
FIG.2 is a sectional view showing a first step member according to one embodiment of the invention;
FIG.3 is a sectional view showing a second step member fabricated according to the one embodiment of the invention;
FIG.4 is a sectional view showing a third step member fabricated according to the one embodiment of the invention;
FIG.5 is an enlarged sectional view showing a sub-assemble member according to the one embodiment of the invention;
FIG.6 is a sectional view showing a double-row tapered-roller bearing assembly according to Conventional Example 1;
FIG.7 is a sectional view showing an assembling method for the double-row tapered-roller bearing assembly of Conventional Example 1;
FIG.8 is a sectional view showing the assembling method for the double-row tapered-roller bearing assembly of Conventional Example 1;
FIG.9 is a perspective view showing a cage according to Conventional Example 1 and the one embodiment of the invention;
FIG.10 is a sectional view showing the sub-assemble member according to Conventional Example 1 and the one embodiment of the invention;
FIG.11 is a sectional view showing ridges of the cage according to Conventional Example 1 and the one embodiment of the invention;
FIG.12 is a sectional view showing a double-row tapered-roller bearing assembly according to Conventional

### Example 2; and

FIG. 13 is a sectional view showing ridges of a first cage of the double-row tapered-roller bearing assembly according to Conventional Example 2.

### Best Modes for Carrying Out the Invention

The best mode for carrying out the invention will hereinbelow be described with reference to the accompanying drawings. A structure of a bearing assembly according to one embodiment of the invention is the same per se as that of the conventional example 2, except for the structure of the first cage 17. Accordingly, description on components of the embodiment which are common to the conventional example 2 described above is dispensed with. Furthermore, those components represented by the same reference characters as those of the conventional example 2 are constructed the same way as in the conventional example 2.

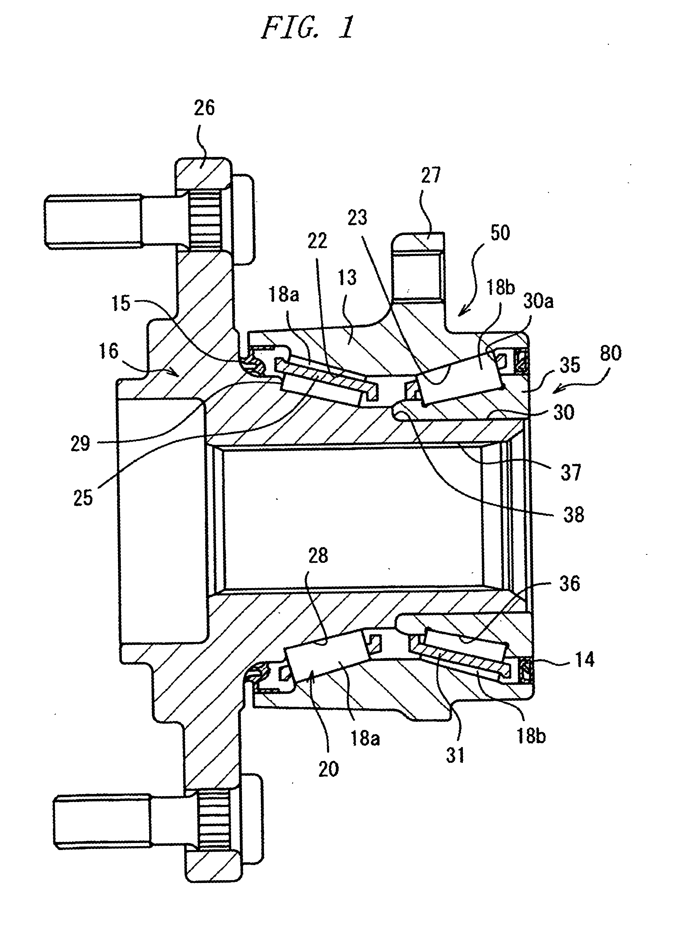

FIG.1 is a sectional view showing one example of a roller bearing assembly obtained by applying the invention. The roller bearing assembly illustrates an automotive hub unit 50 for supporting a drive road wheel. A difference between FIG.1 and FIG.12 showing the conventional example 2 only consists in a first cage 25 shown in FIG.1. The first cage 25 is similar to the cage of the conventional example 1 shown in FIG.9 and has high general-purpose versatility. As shown in FIG.9, the first cage 25 defines the truncated conical surface including: the greater ring 6a defining the greater diameter of a pair of ring members in spaced relation; the smaller ring 6b defining the smaller diameter; a plurality of ridges 6c bridged between these ring members; and the annular rib 6d extended radially inwardly from the radial inside end of the smaller ring 6b. Such a structure defines a plurality of trapezoidal window pockets 10 between respective pairs of adjoining ridges 6c, the pockets accommodating the tapered rollers 5 respectively and arranged with equal spacing. FIG.10 is a sectional view showing a sub-assemble member 20 wherein the first-row tapered rollers 18a are placed in the pockets 10. The first-row tapered rollers 18a are disposed in a manner to sink into the respective pockets 10 from the diametrical inner side of the first cage 25. FIG.11 is a sectional view showing the ridges 6c of the first cage 25 as taken on the plane orthogonal to the longitudinal direction thereof. The figure depicts the first-row tapered rollers 18a so disposed with the phantom lines. The space between adjoining ridges 6c or the circumferential width of the pocket is smaller than the diameter of each tapered roller 18a as determined at each place on the generatrix of the first-row tapered rollers 18a. Hence, the tapered rollers 18a are held in position as sunk into the respective pockets of the first cage 25. In the sub-assemble member 20, the cage 6 merely supports the tapered rollers 5 on diametrical outer sides thereof. Therefore, the first-row tapered rollers 18a never drop from the sub-assemble member 20 diametrically outwardly thereof. Depending upon some posture of the sub-assemble member 20, however, the first-row tapered roller 18a may incline diametrically inwardly of the sub-assemble member so as to drop off therefrom. In this respect, the sub-assemble member 20 differs from the sub-assemble member 19 of the conventional example 2, which is adapted to prevent the tapered rollers from dropping diametrically inwardly.

The details of each component of the roller bearing assembly of the embodiment are as follows. As shown in FIG.1, the outer ring 13 includes the first outer raceway 22 and the second raceway 23 on the inner peripheral surface thereof, which are each defined by a conically recessed surface. The first outer raceway 22 and the second outer raceway 23 are disposed in the opposite directions and in a manner to present the smaller diameter sides of the conically recessed surfaces thereof in end-to-end relation. As a result, the first outer raceway 22 and the second outer raceway 23 are inclined in the opposite directions relative to each other. Furthermore, these outer raceways are so inclined as to progressively increase the inside diameter of the outer ring 13 from the center thereof toward the respective ends thereof. The outer ring 13 is further formed with a fixture portion 27 for fixing the outer ring 13 to a suspension device and the like (not shown), the fixture portion projecting outwardly from an intermediate portion of an outer peripheral surface of the ring. The hub body 16 includes the flange 26 projecting diametrically outwardly from one end thereof. The flange 26 serves to support the road wheel. The hub body 16 is formed with the first inner raceway 28 at an intermediate portion thereof, the inner raceway defined by a conically protruded surface. The first inner raceway 28 is so inclined as to progressively decrease the diameter of the hub body 16 from the one end (the side formed with the flange 26) toward the other end thereof. A step-like greater jaw 29 is formed at an edge of the inner raceway 28 (on the one-end-side of the hub body) such as to decrease the diameter of the hub body 16 at the corresponding portion of the inner raceway 28, whereas the other edge of the inner raceway 28 (on the other-end-side of the hub body) is free from a step-like smaller jaw for decreasing the diameter of the hub body 16 at the corresponding portion of the inner raceway 28. Further, the hub body 16 includes a smaller-diameter cylindrical surface portion 30 at the other end thereof (the end opposite to the end where the flange 26 is formed). The smaller-diameter cylindrical surface portion 30 has a smaller diameter than the first inner raceway 28 and defines a cylindrical surface concentric with the hub body 16. The hub body 16 is centrally formed with a spline hole 37 for spline engagement with an end of an automotive drive shaft (not shown).

The inner ring 35 is fixed to the hub body 16 as fitted on an outer periphery of the smaller-diameter cylindrical surface portion 30 formed at the other end of the hub body 16. An outer periphery of the inner ring 35 is formed with the second inner raceway 36 inclined in a direction to oppose the second outer raceway 23. The inner ring 35 is fixedly fitted on the smaller-diameter cylindrical surface portion 30, as positioned to abut against a step face 38 of the smaller-diameter cylindrical surface portion 30 of the hub body 16 at one end thereof (the end close to the flange 26).

The first inner raceway 28 and the first outer raceway 22 oppose each other, while a plurality of first-row tapered rollers 18a are interposed between these raceways. These first-row tapered rollers 18a are arranged with equal spacing by means of the first cage 25. As mentioned supra, the first cage 25 has the same structure as the cage 6 of the conventional example 1. Furthermore, the second inner raceway 36 and the second outer raceway 23 oppose each other, while a plurality of second-row tapered rollers 18b are interposed between these raceways. These second-row tapered rollers 18b are arranged with equal spacing by means of a second cage 31. The second cage 31 is identical with the first cage 25, thus having the same structure as the cage 6 of the conventional example 1.

The opposite ends of the inner peripheral surface of the outer ring 13 are provided with the first seal ring 15 and a second seal ring 14, respectively. The first seal ring 15 is disposed on the inner peripheral surface of the outer ring 13 at its end close to the first outer raceway 22, so as to seal a space between the inner peripheral surface of the outer ring 13 at its end close to the first outer raceway 22 and the outer peripheral surface of the hub body 16 at place opposite the above end. On the other hand, the second seal ring 14 is disposed on the inner peripheral surface of the outer ring 13 at its end close to the second outer raceway 23, so as to seal a space between the inner peripheral surface of the outer ring 13 at its end close to the second outer raceway 23 and the outer peripheral surface of the inner ring 35 at place opposite the above end.

The method of assembling the roller bearing assembly having the structure of FIG.1 is as follows. First, the sub-assemble member 20 combining the first cage 25 with the first-row tapered rollers 18a is fabricated. The sub-assemble member 20 is of the same structure as the sub-assemble member 11 of the conventional example 1 shown in FIG. 10.

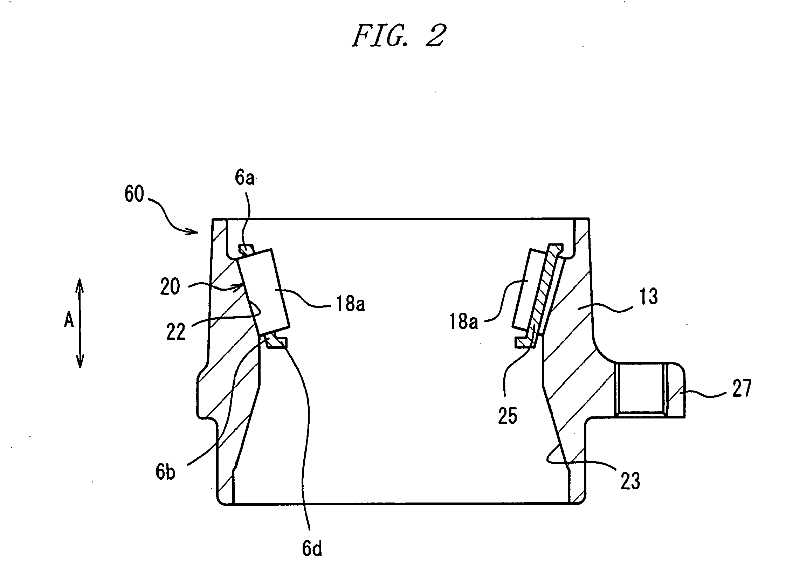

A first step of the assembling method according to the embodiment is to combine this sub-assemble member 20 with the outer ring 13. As a result of this first step, a first step member 60 combining the sub-assemble member 20 with the outer ring 13 is obtained, as shown in FIG.2. In FIG.2, the sub-assemble member 20 is set on the first outer raceway 22 of the outer ring 13. In the first step, the sub-assemble member 20 is substantially maintained in a horizontal posture such as to prevent all the tapered rollers or all the first-row tapered rollers 18a from dropping off. Specifically, the sub-assemble member 20 is maintained in the posture in which the first cage 25 constituting the sub-assemble member 20 and defining the substantially conical surface is substantially placed horizontally with its wider opening side of the substantially conical surface positioned upwardly. In other words, during the first step, the sub-assemble member 20 is maintained in the posture in which the greater ring 6a defining the greater diameter of the first cage 25 constituting the sub-assemble member 20 is positioned upwardly relative to the smaller ring 6b defining the smaller diameter of the first cage 25 and which a plane contacting the greater ring 6a is oriented substantially horizontally.

The substantially horizontal posture of the sub-assemble member 20 preventing the drop-off of the all of the first-row tapered rollers 18a is specifically described as below. That is, the first cage 25 is horizontally supported while the greater ring 6a defining the greater diameter thereof is positioned upwardly relative to the smaller ring 6b defining the smaller diameter of the first cage 25. Furthermore, the sub-assemble member 20 has its axis (axis about which the roller bearing assembly rotates) is oriented vertically. In addition, all the first-row tapered rollers 18a have their centroids G located radially outwardly with respect to the radially innermost support points P to be described hereinlater. In short, the posture of the sub-assemble member is defined such that the axis of the sub-assemble member is oriented vertically and that a distance β is smaller than a distance γ (to be described hereinlater) with respect to every one of the first-row tapered rollers 18a. The radially innermost support point P, the distance β and the distance γ are described as below.

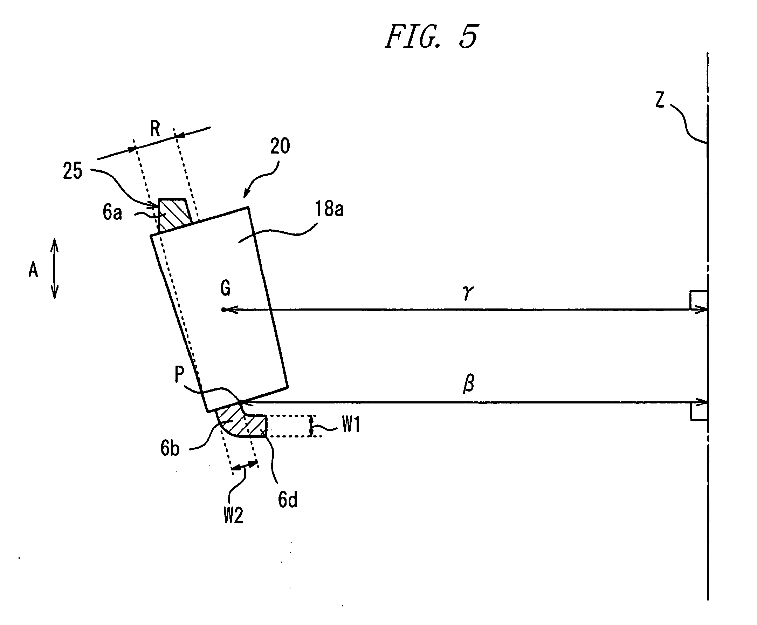

FIG.5 is an enlarged sectional view of the sub-assemble member 20. In FIG.5, the line A indicates the vertical direction whereas the upper arrow indicates the vertically upward direction. The axis of the sub-assemble member 20 substantially coincides with the vertical line. The smaller ring 6b of the first cage 25 and the first-row tapered roller 18a have contact portions at which the smaller ring and the tapered roller are in face-to-face contact, line-to-line contact and point-to-point contact. Of the contact portions, a point located most radially inwardly and vertically downwardly with respect to the centroid G of the first-row tapered roller 18a is the radially innermost support point P. It is noted here that the first cage 25 of the sub-assemble member 20 is not constructed to restrain the first-row tapered rollers 18a from inclining radially inwardly. Thus, the first-row tapered rollers 18a are allowed to incline radially inwardly. Accordingly, in a case where the centroid G is located radially outwardly with respect to the radially innermost support point P or where the distance β between the point P and a vertical line Z passing through the center of the smaller ring 6b is smaller than the distance γ between the point G and the vertical line Z (β<γ), the first-row tapered rollers 18a are never inclined radially inwardly to drop off. On the other hand, in a case where the centroid G is located radially inwardly with respect to the radially innermost support point P or where the distance β between the point P and the vertical line Z is greater than the distance γ between the point G and the vertical line Z (β>γ), the first-row tapered rollers 18a may be inclined radially inwardly to drop off. If all the first-row tapered rollers 18a are adapted to have their centroids G located radially outwardly with respect to the radially innermost support points P, the first-row tapered rollers 18a are restrained from inclining radially inwardly to drop off. In a cage featuring even higher general-purpose versatility, a value given by dividing the thickness W2 of a bottom face of the pocket 10 (the thickness of the smaller ring 6b) by the radius R of a smaller bottom of the first-row tapered roller 18a is in the range of 0.4 or more and 0.7 or less. Therefore, the cage having the above value in this range features a particularly high general-purpose versatility, accomplishing even further cost reduction.

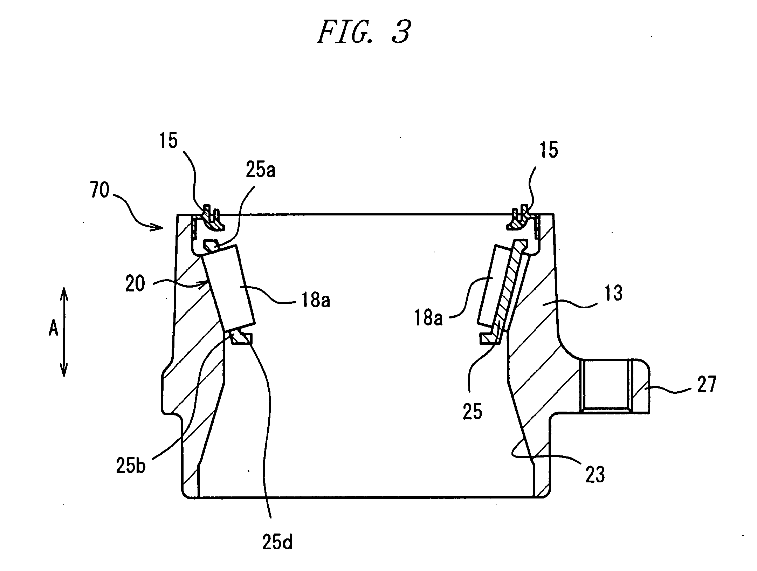

A second step of the assembling method according to the embodiment is to mount the first seal ring 15 to the aforesaid first step member 60. The seal ring 15 is fixedly fitted in the inner periphery of the outer ring 13 at its end close to the first outer raceway 22. This step provides a second step member 70 as shown in FIG.3. During the second step, as well, the sub-assemble member 20 is maintained in the same posture as in the aforementioned first step. Therefore, the first-row tapered rollers 18a in the sub-assemble member 20 are prevented from inclining diametrically inwardly to drop off.

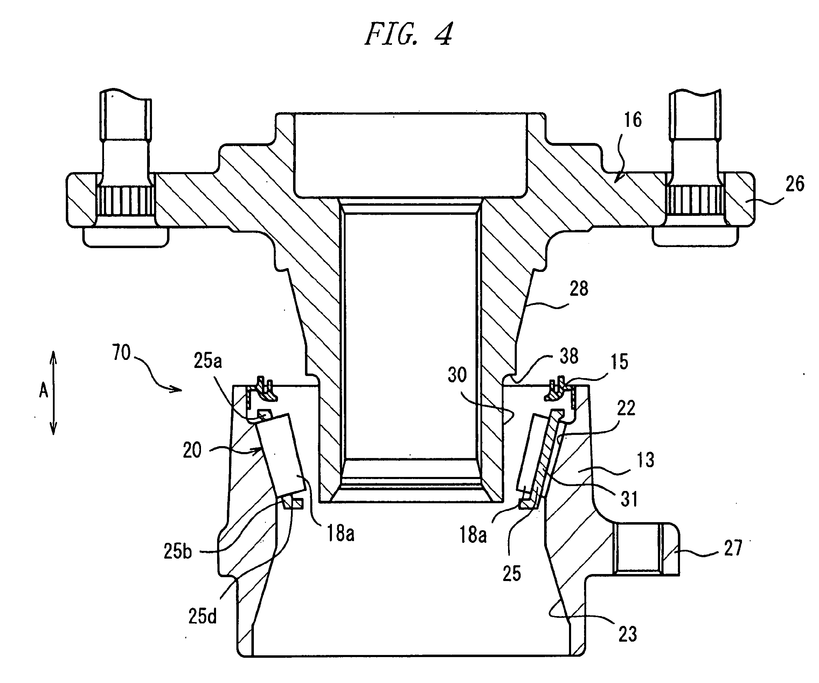

A third step of the assembling method according to the embodiment is to combine the above second step member 70 with the hub body 16. In this step, the hub body 16 is inserted into the second step member 70 so as to be combined therewith. In the third step, as shown in FIG.4, the hub 16 is positioned to posture its one end formed with the flange 26 upwardly relative to its other end formed with the smaller-diameter cylindrical surface portion 30. On the other hand, the second step member 70 is maintained such that the sub-assemble member 20 is in the same posture as in the first step and the second step. As shown in FIG.4, the other end of the hub 16 is inserted into the outer ring 13 through its end provided with the first seal ring 15. Since the hub 16 and the second step member 70 are combined together as maintained in such postures, the first-row tapered rollers 18a in the sub-assemble member 20 are prevented from inclining diametrically inwardly to drop off, just as in the aforementioned first step and second step.

After the third step thus performed, a fourth step is performed to insert an inner ring member 80 into the outer ring 13 through its (upper) side opposite the smaller-diameter cylindrical surface portion 30 thereby fixedly fitting the inner ring 35 on the smaller-diameter cylindrical surface portion 30 of the hub body 16, the inner ring member 80 having the second-row tapered rollers 18b disposed in the individual pockets of the second cage 31 and clamped between the inner ring 35 and the second cage 31 (see FIG.1). In this step, there is no fear of the drop-off of the first-row tapered rollers 18a, which are clamped between the first outer raceway 22 and the first inner raceway 28. Likewise to the conventional example 1, the second-row tapered rollers 18b may be handled as integrally combined with the inner ring 35 and the second cage 31. The second-row tapered rollers are clamped between the second cage 31 and the second inner raceway 36, thus involving no fear of drop-off. This negates the need for considering the postures of the individual members for the sake of obviating the drop-off of the tapered rollers. In the fourth step, the insertion of the inner ring member 80 may be facilitated as follows. That is, the third step member fabricated in the third step (see FIG.4) is placed in a posture in which the one end (the side formed with the flange 26) of the hub body 16 lies underneath the other end thereof (the smaller-diameter cylindrical surface portion 30 of the outer ring 13), while the inner ring member 80 is inserted in the third step member from above (the outer raceway-23 side of the outer ring 13). That is, a method may be adopted wherein the posture of the third step member is vertically inverted when the operation proceeds from the third step to the fourth step. This method is preferred because the hub body 16 may attain a sufficient contact surface with a jig (receiving jig) supporting the hub body 16 on the one end thereof particularly when the inner ring 35 is press-fitted on the smaller-diameter cylindrical surface portion 30 of the hub body 16 from above. Hence, the hub body 16 is stably supported so that the press-fitting operation may be carried out positively. In the final step, the second seal ring 14 is mounted to place between the end of the outer peripheral surface of the inner ring 35 and the end of the inner peripheral surface of the outer ring (see FIG.1). According to the aforementioned method, the roller bearing assembly may be fabricated without using the costly cage having poor general-purpose versatility but by exclusively using the cage featuring the high general-purpose versatility.

As the cage featuring the even higher general-purpose versatility, a resin cage is constructed such that a bottom face of the pocket 10 has a greater thickness W2 (see FIG.5) than a thickness W1 of the annular rib, whereas a metal cage is constructed such that the width W2 of the ridge is equal to the thickness 1 of the annular rib. Accordingly, the cage satisfying such conditions may accomplish the cost reduction more favorably. A resin material of the cage featuring the high general-purpose versatility may include glass fiber-reinforced nylon and the like, whereas a metal material of the cage featuring the high general-purpose versatility may include mild steel plate and the like.

## Claims

1. An assembling method for a double-row tapered-roller bearing assembly, comprising:
- an outer ring (13) including a first outer raceway (22) and a second outer raceway (23) formed on an inner peripheral surface thereof;
- a hub body (16) including a first inner raceway (28) in opposing relation with the first outer raceway (22), and formed with a flange (26) projecting diametrically outwardly from one end thereof;
- an inner ring (35) including a second inner raceway (36) in opposing relation with the second outer raceway (23), and fixedly fitted on an outer peripheral surface (30) of the other end of the hub body (16);
- a plurality of first-row tapered rollers (18a) interposed between the first inner raceway (28) and the first outer raceway (22);
- a first cage (25) allowing the first-row tapered rollers (18a) to be arranged thereon at regular space intervals and to be inclined radially inwardly not being constructed to restrain the first-row tapered rollers (18a) from dropping off, wherein the ratio formed by the thickness (W2) of a bottom face of a pocket (10) of the first cage (25) divided by the radius (R) of a smaller bottom of the first-row tapered rollers (18a) is in the range of 0.4 to 0.7; and
- a first seal ring (15) disposed on the inner peripheral surface of the outer ring (13) at its end close to the first outer raceway (22),
the method comprising the following steps:
- a first step of forming a first step member (60) by combining a sub-assemble member (20) with the first outer raceway (22) of the outer ring (13), the sub-assemble member (20) combining the first cage (25) with the first-row tapered rollers (18a);
- a second step of forming a second step member (70) by mounting the first seal ring (15) to the first step member (60); and
- a third step of combining the second step member (70) with the hub body (16),
- wherein during the first to third steps, the individual first-row tapered rollers (18a) are supported by the first cage (25) in a manner that in a state where the first cage (25) is horizontally supported and has its greater diameter side positioned upwardly, all the first-row tapered rollers (18a) of the sub-assemble member (20) have their centroids (G) located radially outwardly with respect to the radially innermost support points (P) on which the first-row tapered rollers (18a) are supported by the first cage (25).

## Patentansprüche

1. Montageverfahren für eine doppelreihige Kegelrollenlageranordnung, die folgendes aufweist:
- einen Außenring (13) mit einer ersten äußeren Laufbahn (22) und einer zweiten äußeren Laufbahn (23), die an einer inneren peripheren Oberfläche von diesem ausgebildet sind;
- einen Nabenkörper (16), der eine erste innere Laufbahn (28) gegenüber von der ersten äußeren Laufbahn (22) aufweist und der mit einem von seinem einen Ende diametral nach außen ragenden Flansch (26) ausgebildet ist;
- einen Innenring (35), der eine zweite innere Laufbahn (36) gegenüber von der zweiten äußeren Laufbahn (23) aufweist und der an einer äußeren peripheren Oberfläche (30) an dem anderen Ende des Nabenkörpers (16) fest angebracht ist;
- eine Vielzahl von in der ersten Reihe befindlichen Kegelrollen (18a), die zwischen der ersten inneren Laufbahn (28) und der ersten äußeren Laufbahn (22) angeordnet sind;
- einen ersten Käfig (25), der eine Anordnung der in der ersten Reihe befindlichen Kegelrollen (18a) an diesem in regelmäßigen Abstandsintervallen sowie ein Neigen von diesen radial nach innen ermöglicht, wobei dabei ein Herausfallen der in der ersten Reihe befindlichen Kegelrollen (18a) nicht verhindert wird, wobei das Verhältnis, das durch die Dicke (W2) einer Bodenfläche einer Tasche (10) des ersten Käfigs (25) dividiert durch den Radius (R) eines kleineren Bodens der in der ersten Reihe befindlichen Kegelrollen (18a) definiert ist, im Bereich von 0,4 bis 0,7 liegt; und
- einen ersten Dichtungsring (15), der an der inneren peripheren Oberfläche des Außenrings (13) an dessen nahe bei der ersten äußeren Laufbahn (22) befindlichen Ende angeordnet ist,
wobei das Verfahren folgende Schritte aufweist:
- einen ersten Schritt, in dem ein Erststufenelement (60) gebildet wird, indem ein Teilanordnungselement (20) mit der ersten äußeren Laufbahn (22) des Außenrings (13) kombiniert wird, wobei das Teilanordnungselement (20) den ersten Käfig (25) mit den in der ersten Reihe befindlichen Kegelrollen (18a) kombiniert;
- einen zweiten Schritt, in dem ein Zweitstufenelement (70) gebildet wird, indem der erste Dichtungsring (15) an dem Erststufenelement (60) angebracht wird; und
- einen dritten Schritt, in dem das Zweitstufenelement (70) mit dem Nabenkörper (16) kombiniert wird,
wobei während des ersten, des zweiten und des dritten Schrittes die einzelnen in der ersten Reihe befindlichen Kegelrollen (18a) von dem ersten Käfig (25) in einer Weise abgestützt werden, daß in einem Zustand, in dem der erste Käfig (25) horizontal abgestützt ist und mit seiner Seite mit größerem Durchmesser nach oben weisend angeordnet ist, sämtliche in der ersten Reihe befindlichen Kegelrollen (18a) des Teilanordnungselements (20) ihre Mittelpunkte (G) radial außenseitig bezüglich der radial innersten Abstützpunkte (P) angeordnet haben, an denen die in der ersten Reihe befindlichen Kegelrollen (18a) von dem ersten Käfig (25) abgestützt sind.

## Revendications

1. Procédé d'assemblage pour un ensemble palier à rouleaux coniques à deux rangées, comprenant:
- une bague extérieure (13) comprenant un premier chemin de roulement extérieur (22) et un second chemin de roulement extérieur (23) formés sur une surface périphérique intérieure de celle-ci;
- un corps de moyeu (16) comprenant un premier chemin de roulement intérieur (28) dans une relation opposée au premier chemin de roulement extérieur (22), et formé avec une bride (26) faisant saillie diamétralement vers l'extérieur à partir d'une extrémité de celui-ci;
- une bague intérieure (35) comprenant un second chemin de roulement intérieur (36) dans une relation opposée au second chemin de roulement extérieur (23), et installée de façon fixe sur une surface périphérique extérieure (30) de l'autre extrémité du corps de moyeu (16);
- une pluralité de rouleaux coniques de première rangée (18a) interposés entre le premier chemin de roulement intérieur (28) et le premier chemin de roulement extérieur (22);
- une première cage (25) permettant aux rouleaux coniques de première rangée (18a) d'être agencés sur celle-ci à des intervalles d'espace réguliers et d'être inclinés de façon radiale vers l'intérieur, et n'étant pas construite pour empêcher les rouleaux coniques de première rangée (18a) de tomber, dans lequel le rapport formé par l'épaisseur (W2) d'une face inférieure d'une poche (10) de la première cage (25) divisée par le rayon (R) d'une partie inférieure plus petite des rouleaux coniques de première rangée (18a) est dans la plage allant de 0,4 à 0,7; et
- une première bague d'étanchéité (15) disposée sur la surface périphérique intérieure de la bague extérieure (13) à son extrémité proche du premier chemin de roulement extérieur (22),
le procédé comprenant les étapes suivantes:
- une première étape consistant à former un élément de première étape (60) en associant un élément de sous-assemblage (20) au premier chemin de roulement extérieur (22) de la bague extérieure (13), l'élément de sous-assemblage (20) associant la première cage (25) aux rouleaux coniques de première rangée (18a);
- une deuxième étape consistant à former un élément de deuxième étape (70) en montant la première bague d'étanchéité (15) sur l'élément de première étape (60); et
- une troisième étape consistant à associer l'élément de deuxième étape (70) au corps de moyeu (16),
dans lequel, au cours des étapes, de la première à la troisième, les rouleaux coniques individuels de première rangée (18a) sont supportés par la première cage (25) d'une manière à ce que, dans un état où la première cage (25) est supportée horizontalement et a son côté de diamètre plus important positionné vers le haut, tous les rouleaux coniques de première rangée (18a) de l'élément de sous-assemblage (20) possèdent des centroïdes (G) situés de façon radiale vers l'extérieur par rapport aux points de support les plus intérieurs de façon radiale (P) sur lesquels les rouleaux coniques de première rangée (18a) sont supportés par la première cage (25).
